# EUROPÄISCHE PATENTSCHRIFT

(11) **EP 4 153 376 B1**
(45) Veröffentlichungstag und Bekanntmachung des Hinweises auf die Patenterteilung: **04.10.2023**
(21) Anmeldenummer: 21762503.7
(22) Anmeldetag: 19.08.2021
(51) Int. Cl.: B23K 9/095, B23K 9/167, B23K 9/29, B23K 9/32

(54) **VERFAHREN UND VORRICHTUNG ZUR ÜBERWACHUNG EINER NICHTABSCHMELZENDEN SCHWEISSELEKTRODE EINER AUTOMATISCHEN LICHTBOGENSCHWEISSVORRICHTUNG**
METHOD OF AND DEVICE FOR MONITORING A NON-MELTING WELDING ELECTRODE OF AN AUTOMATED ARC WELDING DEVICE
PROCÉDÉ ET DISPOSITIF DE SURVEILLANCE D'UNE ÉLECTRODE DE SOUDAGE NON CONSOMMABLE D'UN DISPOSITIF DE SOUDAGE À L'ARC AUTOMATISÉ

(30) Priorität: 20.08.2020 EP 20191952
(43) Veröffentlichungstag der Anmeldung: 29.03.2023
(73) Patentinhaber: FRONIUS INTERNATIONAL GmbH, 4643 Pettenbach (AT)
(72) Erfinder: REINTHALER, Günther, 4643 Pettenbach (AT); LEUCHTENMÜLLER, Martin, 4643 Pettenbach (AT)
(74) Vertreter: SONN Patentanwälte OG
(86) Internationale Anmeldenummer: PCT/EP2021/072983
(87) Internationale Veröffentlichungsnummer: WO 2022/038210

(56) Entgegenhaltungen:
- DE-A1-102012 214 249
- JP-A- H05 200 556
- JP-A- H09 314 333
- M. S. MC GOUGH ET AL: "VISUAL MONITORING OF REMOTE WELDING OPERATIONS", WELDING JOURNAL, AMERICAN WELDING SOCIETY, MIAMI, FL, US, Bd. 69, Nr. 12, 1. Dezember 1990 (1990-12-01), Seiten 23-28, XP000174149, ISSN: 0043-2296

## Beschreibung

Die Erfindung betrifft ein Verfahren zur Überwachung einer nichtabschmelzenden Schweißelektrode, insbesondere Wolframelektrode, einer automatisierten Lichtbogenschweißvorrichtung, insbesondere WIG-Schweißvorrichtung, wobei mit Hilfe zumindest einer Kamera Bilder der Schweißelektrode aufgenommen und die Bilder verarbeitet werden und daraus auf den Zustand der Schweißelektrode rückgeschlossen wird, und die Bilder der Schweißelektrode während eines mit der Lichtbogenschweißvorrichtung durchgeführten Schweißprozesses aufgenommen werden, die Bilder nachbearbeitet werden und der Lichtbogen des Schweißprozesses extrahiert wird, und aus den nachbearbeiteten Bildern die Form des Endes der Schweißelektrode ermittelt und mit einer vordefinierten Form des Endes der Schweißelektrode verglichen wird.

Weiters betrifft die Erfindung eine Vorrichtung zur Überwachung einer nichtabschmelzenden Schweißelektrode, insbesondere Wolframelektrode, einer automatisierten Lichtbogenschweißvorrichtung, insbesondere WIG-Schweißvorrichtung, mit zumindest einer Kamera zur Aufnahme von Bildern der Schweißelektrode und einer Bildverarbeitungseinrichtung zur Verarbeitung der Bilder und zum Erhalt eines Rückschlusses daraus auf den Zustand der Schweißelektrode, wobei die zumindest eine Kamera zur Aufnahme der Bilder der Schweißelektrode während eines mit der Lichtbogenschweißvorrichtung durchgeführten Schweißprozesses ausgebildet ist, die Bildverarbeitungseinrichtung zur Nachbearbeitung der Bilder und Extraktion des Lichtbogens des Schweißprozesses und zur Ermittlung der Form des Endes der Schweißelektrode aus den nachbearbeiteten Bildern und zum Vergleich mit einer vordefinierten Form des Endes der Schweißelektrode ausgebildet ist.

Die Erfindung bezieht sich auf automatisierte Lichtbogenschweißverfahren und -vorrichtungen mit nichtabschmelzenden Schweißelektroden, insbesondere WIG-Schweißverfahren und WIG-Schweißvorrichtungen mit Wolfram-Elektrode. Unter den Begriff der automatisierten Lichtbogenschweißvorrichtungen fallen insbesondere robotergesteuerte Lichtbogenschweißvorrichtungen oder Schweißvorrichtungen, die auf einem Manipulator, wie einem Roboter, Linearfahrwerk, Drehgestell oder dgl. angeordnet sind und automatisch entlang einer gewünschten Schweißbahn bewegt werden. Vor Beginn eines Schweißprozesses wird üblicherweise der Zustand der nichtabschmelzenden Schweißelektrode vom Schweißer geprüft und gegebenenfalls die Schweißelektrode geschliffen oder sogar erneuert.

DE 10 2012 214249 A1 offenbart den Oberbegriff der Ansprüche 1 und 10. Dieses Dokument offenbart, dass bei dem Verfahren zur Beurteilung der Standzeit einer Wolfram-Elektrode beim Schweißen ein Bild der Wolfram-Elektrode erfasst wird. Anhand des Bildes wird die Kontur der Wolfram-Elektrode zumindest teilweise ermittelt. Diese Kontur wird mit einer oder mehreren vorgegebenen Referenzdaten einem Vergleich unterzogen. Und anhand des Vergleichs wird es auf die verbleibende Standzeit und/oder auf ein nahendes Ende der Standzeit geschlossen.

Bei Punktschweißprozessen ist die visuelle Beurteilung des Zustands der Punktschweißelektroden bekannt. Beispielsweise beschreibt die US 8,953,033 B2 eine Vorrichtung zur Inspektion des Verschleißes von Punktschweißelektroden über entsprechende mit einer Kamera aufgenommene Bilder und nachfolgender Bildverarbeitung. Bei Lichtbogenschweißverfahren ist jedoch aufgrund des sehr hellen Lichtbogens eine visuelle Beurteilung des Schweißbereichs und insbesondere der Schweißelektrode, an der der Lichtbogen brennt, besonders schwierig.

Beispielsweise zeigt die WO 2016/044874 A1 ein Verfahren zur Überwachung eines Lichtbogenschweißprozesses, wobei die mit einer Kamera aufgenommenen Bilder in mehrere unterschiedlich belichtete Teilbilder aufgeteilt und wieder zusammengesetzt werden. Dies erlaubt eine Beobachtung und Beurteilung der Schweißstelle während des Schweißprozesses trotz des besonders hellen Lichtbogens.

Bei automatisierten Schweißanlagen kann der Schweißprozess auch mittels Kamera beobachtet werden, um beispielsweise eine Positionsregelung des Schweißbrenners in Bezug auf das Werkstück durchzuführen. Beispielsweise beschreibt die JP 2018-138309 A eine Schweißvorrichtung und ein Schweißverfahren mit einer nichtabschmelzenden Elektrode, wobei ein Bild der Schweißstelle aufgenommen und aufgrund des aufgenommenen Bildes eine Bestimmung bzw. Steuerung der Position des Schweißdrahts in Bezug auf die nichtabschmelzende Elektrode des Schweißbrenners vorgenommen wird.

Die JP H05 200556 A beschreibt ein Verfahren zur Überwachung einer nichtabschmelzenden Schweißelektrode einer Lichtbogenschweißvorrichtung, wobei zur Verringerung des Einflusses des grellen Lichtbogens der Schweißstrom während einer kurzen Zeit reduziert wird, sodass der Schweißprozess nicht stark beeinflusst wird, aber die Helligkeit des Lichtbogens verringert wird. Während der Phase der Stromreduktion wird ein Bild der Schweißelektrode aufgenommen, und mittels eines optischen Bandpassfilters nachbearbeitet.

Aus der JP H09 314333 A ist ein anderes Überwachungsverfahren bekannt geworden, bei dem der störende Einfluss des Lichtbogens dadurch verringert wird, dass eine Lichtquelle hinter der Schweißelektrode angeordnet wird, wodurch die vor der Schweißelektrode angeordnete Kamera eine Kontur der Schweißelektrode aufnehmen kann. Darüber hinaus wird ein Infrarot-Filter angewendet und das Bild der Schweißelektrode kurz nach dem Erlöschen des Lichtbogens aufzunehmen, wenn die Schweißelektrode noch eine entsprechende Wärmestrahlung abgibt.

Bei manchen automatisierten Schweißverfahren, beispielsweise beim Auftragsschweißen ("Cladding") von Pipelinerohren mittels entsprechender Schweißvorrichtungen, werden sehr lange andauernde automatisierte Schweißprozesse durchgeführt, um die Rohre der Pipelines innen auszukleiden. Zwar werden derartige Schweißprozesse über Kameras überwacht, der Verschleiß der nichtabschmelzenden Elektrode, insbesondere Wolfram-Elektrode, wird jedoch nur in den Pausen des Schweißprozesses visuell beurteilt oder indirekt über Lichtbogenparameter (Lichtbogenspannung, Lichtbogenstrom) abgeschätzt. Während der relativ langen Schweißphasen zwischen den Pausen kann jedoch keine zuverlässige Aussage über den tatsächlichen Zustand der Schweißelektrode getroffen werden.

Die Aufgabe der vorliegenden Erfindung besteht daher in der Schaffung eines oben genannten Verfahrens und einer oben genannten Vorrichtung zur Überwachung einer nichtabschmelzenden Schweißelektrode einer automatisierten Lichtbogenschweißvorrichtung, welche eine zuverlässige, zeitnahe und vorzugsweise kontinuierliche Beurteilung des Verschleißes der nichtabschmelzenden Schweißelektrode während des Schweißprozesses ohne Unterbrechung zulässt. Dadurch sollen automatisierte Schweißprozesse mit längeren Standzeiten erzielbar sein bzw. Verschleißerscheinungen an den Schweißelektroden rascher erkannt und somit höhere Schweißqualitäten erzielt werden können. Nachteile bekannter Verfahren und Vorrichtungen sollen reduziert oder vermieden werden.

Gelöst wird die erfindungsgemäße Aufgabe durch ein oben genanntes Überwachungsverfahren, bei dem die Bilder nachbearbeitet werden, indem zumindest zwei Bilder mit unterschiedlicher Belichtungszeit aufgenommen werden, aus den zumindest zwei Bildern mit unterschiedlicher Belichtungszeit Teilbereiche ausgeschnitten und bzw. oder gewichtet, und zu einem zusammengesetzten Bild zusammengefasst werden, und bei Abweichung der ermittelten Form des Endes der Schweißelektrode von der vordefinierten Form des Endes der Schweißelektrode ein Signal ausgegeben wird, siehe Anspruch 1. Das erfindungsgemäße Verfahren sieht vor, dass die während des Lichtbogenschweißprozesses aufgenommenen Kamerabilder in geeigneter Weise nachbearbeitet werden, indem zumindest zwei Bilder mit unterschiedlicher Belichtungszeit aufgenommen werden, aus den zumindest zwei Bildern mit unterschiedlicher Belichtungszeit Teilbereiche ausgeschnitten und bzw. oder gewichtet, und zu einem zusammengesetzten Bild zusammengefasst werden. Durch eine solche Methode kann der grelle Lichtbogen optimal aus dem resultierenden Bild extrahiert werden und trotzdem ein aussagekräftiges Bild erzielt werden, welches eine optimale visuelle Beurteilung der Zustands bzw. der Form und allenfalls der Position der Schweißelektrode bzw. der Elektrodenspitze zulässt. Eine Gewichtung der Bilder hat dabei den Vorteil, dass dazu nur Bilder mit geeigneter Qualität verwendet werden. Die Qualität wird dabei anhand von Bildparametern, wie beispielsweise Graustufen, die Einfluss auf das Berechnungsverfahren für die zusammengesetzten Bilder haben, beurteilt. Dadurch kann aus den Bildern die Form des Endes der Schweißelektrode ermittelt und mit einer vordefinierten Form des Endes einer Schweißelektrode automatisch verglichen werden. Bei entsprechender Abweichung der Ist-Form von der vordefinierten Soll-Form des Endes der Schweißelektrode wird ein Signal ausgegeben, welches dem Schweißer oder der Schweißvorrichtung eine Aussage über den Verschleiß der Schweißelektrode oder den Grad des Verschleißes erlaubt. Je nach Art der Abweichung kann die Abnutzung der Schweißelektrode oder eine Verschmutzung der Schweißelektrode durch anhaftende Schweißspritzer oder ein Eintauchen der Schweißelektrode in das Schmelzbad sofort bzw. quasi in Echtzeit während des Schweißprozesses erkannt werden. Nach der Erkennung können entsprechende Maßnahmen eingeleitet werden, um den Zustand der Schweißelektrode zu verbessern (beispielsweise durch Reinigen oder Schleifen des Endes der Schweißelektrode) oder die Schweißelektrode auszutauschen. Notfalls kann der laufende Schweißprozess auch gestoppt werden, wenn sonst die gewünschte Schweißqualität nicht mehr gewährleistet werden kann. Selbstverständlich kann das Überwachungsverfahren auch bei nicht laufendem Schweißprozess durchgeführt werden, um eine Referenz zu der Auswertung der Kamerabilder während des Schweißprozesses bei brennendem Lichtbogen zu schaffen. Das erfindungsgemäße Verfahren kann unter der Voraussetzung entsprechender Rechnerleistungen, welche in modernen Schweißstromquellen ohnedies vorhanden sind, relativ einfach und kostengünstig implementiert werden. Die für die Aufnahme der Bilder notwendige Kamera oder mehrere Kameras sind bei automatisierten Lichtbogenschweißvorrichtungen in der Regel ohnedies vorhanden. Die Verarbeitung der Bilder kann auch auf externen Rechnern oder dgl. vorgenommen werden.

Vorteilhafterweise wird aus den nachbearbeiteten Bildern auch die Position des Endes der Schweißelektrode ermittelt und mit einer vordefinierten Position des Endes der Schweißelektrode verglichen, und bei Abweichung der ermittelten Position des Endes der Schweißelektrode von der vordefinierten Position des Endes der Schweißelektrode ein Signal ausgegeben. Neben der Form der nichtabschmelzenden Schweißelektrode ist auch die Position ein wichtiges Kriterium, welches die Schweißqualität beeinflussen kann. Bei Erkennung einer unzulässigen Abweichung der tatsächlichen Position oder Ist-Position des Endes der Schweißelektrode von der gewünschten Position oder Soll-Position kann automatisch eine Korrektur der Position des Schweißbrenners in Bezug auf das Werkstück oder eine Korrektur der Position der nichtabschmelzenden Schweißelektrode im Schweißbrenner oder ein Tausch der Schweißelektrode (beispielsweise wenn diese verbogen ist) vorgenommen werden.

Weiters kann die Form des Endes der Schweißelektrode durch den Winkel einer Spitze der Schweißelektrode und bzw. oder die Länge der vom Ende einer Gasdüse vorstehenden Schweißelektrode, und bzw. oder den Durchmesser eines zylindrischen Teils der Schweißelektrode ermittelt werden. Diese Parameter sind für häufig verwendete kegelförmig zugespitzte Schweißelektroden oder Schweißnadeln optimal für die Beurteilung des Verschleißes der Schweißelektrode. Bei speziell ausgebildeten Schweißelektroden können aber auch andere Parameter zur Beurteilung des Verschlei-ßes herangezogen und in der Bildverarbeitung berücksichtigt werden.

Gemäß einem weiteren Merkmal der Erfindung wird als Signal ein Warnsignal, insbesondere ein akustisches oder optisches Warnsignal, ausgegeben. Auf diese Weise kann ein Schweißer auf einen fortschreitenden Verschleiß der Schweißelektrode aufmerksam gemacht werden, sodass rechtzeitig entsprechende Maßnahmen, wie das Abschleifen der Schweißelektrode oder ein Tausch der Schwei-ßelektrode, vorgenommen werden kann. Dadurch kann weiterhin eine hohe Schweißqualität des Schweißprozesses gewährleistet werden.

Ebenso kann als Signal ein Steuersignal für die automatisierte Lichtbogenschweißvorrichtung ausgegeben werden. Je nach Art des Verschleißes der Schweißelektrode kann beispielsweise durch Annäherung des Schweißbrenners zum Werkstück durch das Steuersignal eine hohe Schweißqualität trotz beginnendem Verschleiß der Schweißelektrode aufrechterhalten werden, ohne die Schweißelektrode sofort nachbearbeiten oder tauschen zu müssen. Dadurch kann die Standzeit bzw. effektive Dauer des Schweißprozesses erhöht werden.

Alternativ oder zusätzlich kann als Signal auch ein Abschaltsignal für die automatisierte Lichtbogenschweißvorrichtung ausgegeben werden. Ein solches Abschaltsignal kann beispielsweise bei unzulässig großen Abweichungen der Form und allenfalls Position des Endes der Schweißelektrode von der vordefinierten Form und allenfalls Position ausgegeben werden, um Schäden am Werkstück verhindern zu können. Beispielsweise kann bei unzulässigem Verschleiß der Schweißelektrode durch Abschaltung der Schweißstromquelle und des Schweißroboters oder dgl. eine Fortsetzung des Schweißprozesses mit schlechter Schweißqualität und somit ein Ausschuss an Werkstücken oder ein Nachbearbeiten des Werkstücks verhindert werden.

Gemäß einer weiteren Ausführungsform des erfindungsgemäßen Verfahrens ist vorgesehen, dass das Signal in Abhängigkeit der Abweichung der ermittelten Form des Endes der Schweißelektrode von der vordefinierten Form des Endes der Schweißelektrode und bzw. oder der Abweichung der ermittelten Position des Endes der Schweißelektrode von der vordefinierten Position des Endes der Schweißelektrode verändert wird. Auf diese Weise kann das Signal an den Grad der ermittelten Abweichung angepasst werden. Bei einem akustischen Signal kann beispielsweise die Lautstärke oder die Frequenz des abgegebenen Warnsignals oder bei einem optischen Signal die Farbe, Lichtstärke oder Blinkfrequenz an den Grad des Verschleißes der Schweißelektrode angepasst werden. Dadurch erhält das Bedienungspersonal zusätzliche Information über den Grad des Verschleißes.

Die Bilder des Endes der Schweißelektrode können beispielsweise während des Polaritätswechsels eines AC-Schweißprozesses aufgenommen werden. Während dieser Phasen kann die Qualität des Bildes aufgrund des kurzzeitigen Erlöschens des Lichtbogens während des Polaritätswechsels erhöht werden.

Bei einem gepulsten Schweißprozess werden die Bilder des Endes der Schweißelektrode vorzugsweise während Prozessphasen des Schweißprozesses mit niedrigerem Schweißstrom, beispielsweise während Grundstromphasen, aufgenommen. Auch durch eine solche spezielle Triggerung der Kamerabilder kann eine Verbesserung der Qualität der aufgenommenen Bilder und in der Folge eine bessere Überwachung und Beurteilung des Zustands des Endes der Schweißelektrode erzielt werden.

Die vordefinierte Form und allenfalls die vordefinierte Position des Endes der Schweißelektrode kann durch Aufnahme von Bildern des Endes einer neuen Schweißelektrode vor der Durchführung des Schweißprozesses festgelegt und gespeichert werden. Dabei können die Bilder nach dem Einspannen einer neuen Schweißelektrode aufgenommen oder auch aus einer beispielsweise vom Hersteller der Schweißelektrode zur Verfügung gestellten Datenbank heruntergeladen werden.

Wenn die zumindest eine Kamera vor der Aufnahme der Bilder der Schweißelektrode kalibriert wird, kann eine absolute Beurteilung der Schweißelektrode über die Kamerabilder vorgenommen werden. Die Kalibrierung kann beispielsweise vor Beginn des Schweißprozesses durch Aufnahme geeigneter Kalibrationsmuster erfolgen. Nach der Kalibration muss der Abstand der Kamera zum Werkstück entsprechend dem Abstand der Kamera zum Kalibrationsmuster konstant gehalten werden.

Die Qualität der Bilder kann dadurch verbessert werden, dass zumindest beim Aufnehmen der Bilder der Schweißelektrode zumindest eine Lichtquelle aktiviert wird. Durch eine Blitzlampe oder Leuchtdiodenarrays kann eine Aufhellung des gewünschten Bereichs und somit eine Kontrasterhöhung erzielt werden.

Vorzugsweise werden die Bilder der Schweißelektrode alle 0,01 s bis 10 s und vorzugsweise mit einer Bildwiederholfrequenz zwischen 10 Hz und 100 Hz aufgenommen. Diese Werte stellen eine ausreichend gute Qualität der aufgenommenen Bilder bei gleichzeitig überschaubarem Speicherbedarf und Rechenaufwand dar. Gelöst wird die erfindungsgemäße Aufgabe auch durch eine oben genannte Überwachungsvorrichtung, wobei die Bildverarbeitungseinrichtung zum Ausschneiden und bzw. oder Gewichten von Teilbereichen aus zumindest zwei mit unterschiedlicher Belichtungszeit aufgenommenen Bildern und zum Zusammenfassen der Teilbereiche zu einem zusammengesetzten Bild ausgebildet ist, und die Bildverarbeitungseinrichtung mit einer Signalvorrichtung verbunden ist, welche zur Ausgabe eines Signals bei Abweichung der ermittelten Form des Endes der Schweißelektrode von der vordefinierten Form des Endes der Schweißelektrode ausgebildet ist. Eine solche Vorrichtung ist relativ einfach mit ohnedies vorhandenen Komponenten der Schweißvorrichtung realisierbar. Zu den dadurch erzielbaren Vorteilen wird auf die obige Beschreibung des Überwachungsverfahrens verwiesen, siehe Anspruch 10.

Vorteilhafterweise ist die Bildverarbeitungseinrichtung zur Ermittlung der Position des Endes der Schweißelektrode aus den nachbearbeiteten Bildern und zum Vergleich mit einer vordefinierten Position des Endes der Schweißelektrode ausgebildet, und ist die Bildverarbeitungseinrichtung mit einer Signalvorrichtung verbunden, welche zur Ausgabe eines Signals bei Abweichung der ermittelten Position des Endes der Schweißelektrode von der vordefinierten Position des Endes der Schweißelektrode ausgebildet ist.

Die Signalvorrichtung kann durch eine Warnsignalvorrichtung, insbesondere einen Lautsprecher zur Ausgabe eines akustischen Warnsignals als Signal oder durch eine Anzeige zur Ausgabe eines optischen Warnsignals als Signal gebildet sein.

Weiters kann die Signalvorrichtung durch eine mit der automatisierten Lichtbogenschweißvorrichtung verbundene Steuervorrichtung zur Ausgabe eines Steuersignals als Signal gebildet sein. Wie bereits oben erwähnt, kann durch das Steuersignal auf einen festgestellten Verschleiß oder eine Abweichung von der Sollposition (Tool Center Point, TCP) der nichtabschmelzenden Schweißelektrode reagiert werden, beispielsweise der Schweißbrenner durch entsprechende Steuerung des Manipulators (Roboter, Linearfahrwerk, Drehgestell oder dgl.) näher an die Oberfläche des zu bearbeitenden Werkstücks herangefahren werden. Dadurch kann bis zu einem gewissen Grad der Verschleiß der Schweißelektrode ausgeglichen und eine gleiche oder ausreichende Schweißqualität erreicht werden. Im Falle eines unzulässigen Verschleißes der Schweißelektrode kann der Schweißprozess auch gestoppt und ein Ausschuss des Werkstücks aufgrund unzulässiger Schweißqualität verhindert werden.

Vorzugsweise ist eine Kalibrationseinrichtung zur Kalibration der zumindest einen Kamera vor der Aufnahme der Bilder der Schweißelektrode vorgesehen. Nach einer solchen Kalibration der Kamera kann eine absolute Beurteilung der Schweißelektrode aufgrund der Kamerabilder erzielt werden.

Wenn zumindest eine Lichtquelle vorgesehen ist, kann die Bildqualität verbessert werden. Als Lichtquellen kommen beispielsweise Blitzlampen, welche mit der Kamera synchronisiert betätigt werden, oder Leuchtdioden bzw. Arrays von Leuchtdioden in Frage.

Die zumindest eine Kamera ist vorzugsweise zur Aufnahme von Bildern der Schweißelektrode alle 0,01 s bis 10 s und vorzugsweise mit einer Bildwiederholfrequenz zwischen 10 Hz und 100 Hz ausgebildet, um Bilder mit ausreichender Qualität zu erhalten, den Speicher- und Rechenbedarf aber gering zu halten.

Die vorliegende Erfindung wird anhand der beigefügten Zeichnungen näher erläutert. Darin zeigen:
- Fig. 1: ein schematisches Blockschaltbild einer automatisierten Lichtbogenschweißvorrichtung mit einer nichtabschmelzenden Schweißelektrode;
- Fig. 2: ein Blockschaltbild einer erfindungsgemäßen Vorrichtung zur Überwachung der nichtabschmelzenden Schweißelektrode einer automatisierten Lichtbogenschweißvorrichtung;
- Fig. 3: eine Ansicht auf das Ende einer nichtabschmelzenden Schweißelektrode; und
- Fig. 4A-4C: schematisch die bei der Überwachung der nichtabschmelzenden Schweißelektrode zu vergleichenden Kamerabilder.

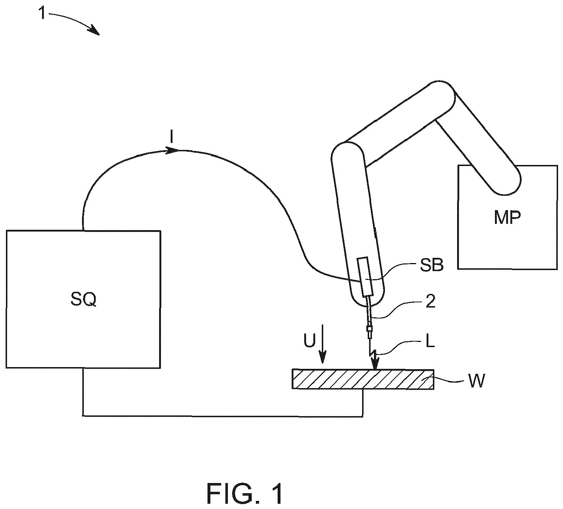

In Fig. 1 ist ein schematisches Blockschaltbild einer automatisierten Lichtbogenschweißvorrichtung 1 mit einer nichtabschmelzenden Schweißelektrode 2, insbesondere einer WIG (Wolfragm Inertgas)-Schweißvorrichtung mit einer Wolfram-Elektrode, dargestellt. Eine Stromquelle SQ wird sowohl mit der am Schweißbrenner SB angeordneten nichtabschmelzenden Schweißelektrode 2 als auch mit dem Werkstück W aus elektrisch leitfähigem Material verbunden. Für die Durchführung eines automatisierten Schweißprozesses ist der Schweißbrenner SB mit einem Manipulator MP, wie einem Roboter, Linearfahrwerk, Drehgestell oder dgl., verbunden, über den der Schweißbrenner SB entlang einer vorgegebenen Schweißbahn über das Werkstück W bewegt wird. Die Stromquelle SQ prägt einen Schweißstrom I zwischen der nichtabschmelzenden Elektrode 2 und dem Werkstück W ein, wodurch zwischen dem Ende der nichtabschmelzenden Schweißelektrode 2 und der Oberfläche des Werkstücks W ein Lichtbogen L gezündet wird. Über eine üblicherweise in der Stromquelle SQ befindliche Steuereinrichtung (nicht dargestellt) werden die zeitlichen Abläufe gesteuert und die jeweiligen Werte des Schweißstromes I und der Schweißspannung U geregelt. Um zwei Werkstücke W miteinander zu verbinden oder eine Schicht auf die Oberfläche des Werkstücks W aufzutragen, wird in den Lichtbogen L ein abschmelzendes Material üblicherweise in Drahtform zugeführt und im Lichtbogen L aufgeschmolzen (nicht dargestellt).

Während bei manuellen Schweißverfahren der Zustand der Schweißelektrode laufend durch den Schweißer beurteilt werden kann und eingeschätzt werden kann, wann ein Schleifen der Elektrodenspitze oder ein Tausch der Schweißelektrode notwendig ist, muss dies bei automatisierten Schweißprozessen über Kamerabilder erfolgen. Aufgrund des grellen Lichtbogens ist eine Auswertung der Kamerabilder während des Schweißprozesses jedoch bisher nicht oder nur unzureichend möglich gewesen.

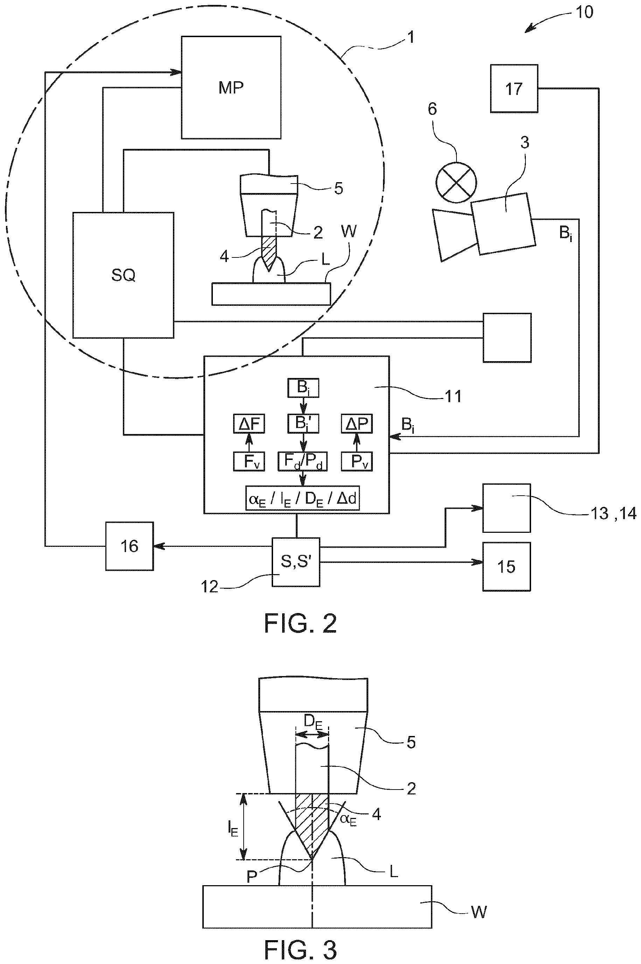

Fig. 2 zeigt ein Blockschaltbild einer erfindungsgemäßen Vorrichtung 10 zur Überwachung der nichtabschmelzenden Schweißelektrode 2 einer automatisierten Lichtbogenschweißvorrichtung 1. Mit zumindest einer Kamera 3 werden während des Schweißprozesses Bilder Bᵢ der nichtabschmelzenden Schweißelektrode 2 bzw. des Endes 4 der Schweißelektrode 2 aufgenommen. An der zumindest einen Kamera 3 oder in der Nähe kann eine Lichtquelle 6 zur Ausleuchtung des Schweißbereichs angeordnet sein. In einer Bildverarbeitungseinrichtung 11 werden die mit der Kamera 3 aufgenommenen Bilder Bᵢ verarbeitet, um eine Qualität der Bilder Bᵢ zu erzielen, welche trotz des Lichtbogens L eine Analyse und einen Rückschluss daraus auf den Zustand der Schweißelektrode 2 zulassen. Die zumindest eine Kamera 3 ist zur Aufnahme der Bilder Bᵢ der Schweißelektrode 2 während des mit der Lichtbogenschweißvorrichtung 1 durchgeführten Schweißprozesses ausgebildet. Die Aufnahme der Bilder Bᵢ kann in Prozessphasen des Schweißprozesses durchgeführt werden, während denen der Lichtbogen nicht oder nur schwach brennt, beispielsweise während Kurzschlussphasen oder Grundstromphasen eines Schweißprozesses. Die Bildverarbeitungseinrichtung 11 dient der entsprechenden Nachbearbeitung der Bilder Bᵢ und Extraktion des Lichtbogens L des Schweißprozesses. Weiters wird in der Bildverarbeitungseinrichtung 11 die Form F_{d} und allenfalls Position P_{d} des Endes 4 der Schweißelektrode 2 aus den nachbearbeiteten Bildern Bᵢ' ermittelt. Danach wird die ermittelte Form F_{d} und allenfalls Position P_{d} des Endes 4 der Schweißelektrode 2 mit einer vordefinierten Form Fᵥ und allenfalls vordefinierten Position Pᵥ des Endes 4 der Schweißelektrode 2 verglichen und die entsprechende Abweichung ΔF der Form und allenfalls Abweichung ΔP der Position berechnet. Die Bildverarbeitungseinrichtung 11 ist mit einer Signalvorrichtung 12 verbunden, welche zur Ausgabe eines Signals S dient, sobald die Abweichung ΔF der Form oder Abweichung ΔP der Position des Endes 4 der Schweißelektrode 2 ein bestimmtes Maß überschreitet. Die Verarbeitung erfolgt kontinuierlich während des Schweißprozesses. Da sich der Zustand der Schweißelektrode 2 nicht sprunghaft ändert, stellt eine Zeitverzögerung bei der Nachbearbeitung der Bilder Bᵢ kein Problem dar bzw. ist eine Auswertung in Echtzeit nicht erforderlich.

Die Signalvorrichtung 12 kann durch eine Warnsignalvorrichtung 13, insbesondere einen Lautsprecher 14 zur Ausgabe eines akustischen Warnsignals als Signal S bei Abweichung ΔF der Form des Endes 4 der Schweißelektrode 2 oder als Signal S' bei Abweichung ΔP der Position des Endes 4 der Schweißelektrode 2 ausgebildet sein. Alternativ oder zusätzlich zur Warnsignalvorrichtung 13 kann auch eine Anzeige 15 mit der Signalvorrichtung 12 zur Ausgabe eines optischen Warnsignals als Signal S oder S' verbunden sein. Weiters kann eine Steuervorrichtung 16 an die Signalvorrichtung 12 angeschlossen sein, über die ein Steuersignal als Signal S, S' an die automatisierte Lichtbogenschweißvorrichtung 1 abgegeben werden kann, wenn ein Verschleiß der Schweißelektrode 2 festgestellt wurde.

Die Signalvorrichtung 12 beobachtet also kontinuierlich den Schweißprozess, sodass ein Verschleiß der Schweißelektrode 2 mitverfolgt wird. Dementsprechend ist es möglich, mittels Warnstufen (beispielsweise über ein Ampelsystem) über den Zustand der Schweißelektrode 2 zu berichten. Dies erfolgt beispielsweise nach jedem Schweißprozess bzw. nach vordefinierten Zeiten, wenn ein Schweißprozess (wie z.B. Auftragsschweißen) über einen langen Zeitraum andauert. Somit informiert die Signalvorrichtung 12 über den aktuellen Zustand der Schweißelektrode 2 und gibt beispielsweise Empfehlungen aus, wann die Schweißelektrode 2 gewechselt oder bearbeitet werden soll.

Über eine Kalibrationseinrichtung 17 kann eine Kalibration der Kamera 3 vor der Aufnahme der Bilder Bᵢ der Schweißelektrode 2, beispielsweise über entsprechende Kalibrationsmuster erfolgen.

Fig. 3 zeigt eine Ansicht auf das Ende 4 einer nichtabschmelzenden Schweißelektrode 2. Zur Beurteilung der Form F des Endes 4 der Schweißelektrode 2 kann der Winkel α_{E} einer Spitze der Schweißelektrode 2 und bzw. oder die Länge l_{E} der vom Ende einer Gasdüse 5 vorstehenden Schweißelektrode 2, und bzw. oder der Durchmesser D_{E} eines zylindrischen Teils der Schweißelektrode 2 aus den Bildern Bᵢ ermittelt werden.

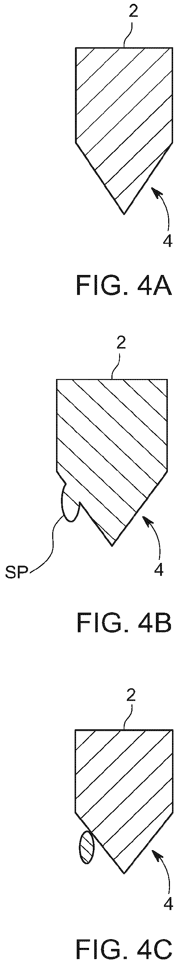

In Fig. 4A ist schematisch ein Referenzbild des Endes 4 einer Schweißelektrode 2, insbesondere das Bild einer neuen Schweißelektrode 2 dargestellt. Figur 4B zeigt ein aktuelles Bild des Endes 4 der Schweißelektrode 2, wobei ein Schweißspritzer SP an der Spitze der Schweißelektrode 2 anhaftet. Durch die Bildverarbeitungseinrichtung 11 wird nun eine Differenz des aktuellen Bildes der Schweißelektrode 2 gemäß Fig. 4B und des Referenzbildes gemäß Fig. 4A erzeugt (siehe Fig. 4C). Aus dem Differenzbild gemäß Fig. 4C kann nun die Abweichung ΔF der ermittelten Form F_{d} des Endes 4 der Schweißelektrode 2 (Bild 4B) von der vordefinierten Form Fᵥ des Endes 4 der Schweißelektrode 2 (Bild 4A) ermittelt und bei Überschreitung einer bestimmten Abweichung ein Signal S ausgegeben werden. Dieses Signal S kann auch in Abhängigkeit der Abweichung ΔF der Form geändert werden.

Bei Fig. 4C ist auch ersichtlich, dass sich der Durchmesser D_{E} der Schweißelektrode 2 verändern kann. Insbesondere bei Schweißprozessen mit langer Dauer kann sich aufgrund der Anhaftung von Schweißspritzer, welche sich flächig verteilen, eine Schicht auf der Schweißelektrode 2 bilden, welche den Durchmesser D_{E} erhöht. Ebenfalls kann aus dem Differenzbild gemäß Fig. 4C die Abweichung ΔP der ermittelten Position P_{d} des Endes 4 der Schweißelektrode 2 (Fig. 4B) von der vordefinierten Position Pᵥ des Endes 4 der Schweißelektrode 2 ermittelt werden und ein Signal S' ausgegeben oder erzeugt werden. Auch dieses Signal S' kann in Abhängigkeit der Abweichung ΔP der Position geändert werden.

Die vorliegende Erfindung erlaubt eine rasche und zuverlässige Feststellung des Zustands der Schweißelektrode während des Schweißprozesses einer automatisierten Lichtbogenschweißvorrichtung und gewährleistet somit eine gleichbleibende optimale Schweißqualität.

## Patentansprüche

1. Verfahren zur Überwachung einer nichtabschmelzenden Schweißelektrode (2), insbesondere Wolframelektrode, einer automatisierten Lichtbogenschweißvorrichtung (1), insbesondere WIG-Schweißvorrichtung, wobei mithilfe zumindest einer Kamera (3) Bilder (Bᵢ) der Schweißelektrode (2) aufgenommen und die Bilder (Bᵢ) verarbeitet werden und daraus auf den Zustand der Schweißelektrode (2) rückgeschlossen wird, und die Bilder (Bᵢ) der Schweißelektrode (2) während eines mit der Lichtbogenschweißvorrichtung (1) durchgeführten Schweißprozesses aufgenommen werden, die Bilder (Bᵢ) nachbearbeitet werden und der Lichtbogen (L) des Schweißprozesses extrahiert wird, und aus den nachbearbeiteten Bildern (Bᵢ') die Form (F_{d}) des Endes (4) der Schweißelektrode (2) ermittelt und mit einer vordefinierten Form (Fᵥ) des Endes (4) der Schweißelektrode (2) verglichen wird, **dadurch gekennzeichnet, dass** die Bilder (Bᵢ) nachbearbeitet werden, indem zumindest zwei Bilder mit unterschiedlicher Belichtungszeit aufgenommen werden, aus den zumindest zwei Bildern mit unterschiedlicher Belichtungszeit Teilbereiche ausgeschnitten und bzw. oder gewichtet, und zu einem zusammengesetzten Bild zusammengefasst werden, und bei Abweichung (ΔF) der ermittelten Form (F_{d}) des Endes (4) der Schweißelektrode (2) von der vordefinierten Form (Fᵥ) des Endes (4) der Schweißelektrode (2) ein Signal (S) ausgegeben wird.

2. Überwachungsverfahren nach Anspruch 1, **dadurch gekennzeichnet, dass** aus den nachbearbeiteten Bildern (Bᵢ') die Position (P_{d}) des Endes (4) der Schweißelektrode (2) ermittelt und mit einer vordefinierten Position (Pᵥ) des Endes (4) der Schweißelektrode (2) verglichen wird und bei Abweichung (ΔP) der ermittelten Position (P_{d}) des Endes (4) der Schweißelektrode (2) von der vordefinierten Position (Pᵥ) des Endes (4) der Schweißelektrode (2) ein Signal (S') ausgegeben wird.

3. Überwachungsverfahren nach Anspruch 1 oder 2, **dadurch gekennzeichnet, dass** die Form (F) des Endes (4) der Schweißelektrode (2) durch den Winkel (α_{E}) einer Spitze der Schweißelektrode (2) und bzw. oder die Länge (l_{E}) der vom Ende einer Gasdüse (5) vorstehenden Schweißelektrode (2), und bzw. oder den Durchmesser (D_{E}) eines zylindrischen Teils der Schweißelektrode (2) ermittelt wird.

4. Überwachungsverfahren nach einem der Ansprüche 1 bis 3, **dadurch gekennzeichnet, dass** als Signal (S, S') ein Warnsignal, insbesondere ein akustisches oder optisches Warnsignal, ein Steuersignal für die automatisierte Lichtbogenschweißvorrichtung (1), und bzw. oder ein Abschaltsignal für die automatisierte Lichtbogenschweißvorrichtung (1) ausgegeben wird.

5. Überwachungsverfahren nach einem der Ansprüche 1 bis 4, **dadurch gekennzeichnet, dass** das Signal (S, S') in Abhängigkeit der Abweichung (ΔF) der ermittelten Form (F_{d}) des Endes (4) der Schweißelektrode (2) von der vordefinierten Form (Fᵥ) des Endes (4) der Schweißelektrode (2) und bzw. oder der Abweichung (ΔP) der ermittelten Position (P_{d}) des Endes (4) der Schweißelektrode (2) von der vordefinierten Position (Pᵥ) des Endes (4) der Schweißelektrode (2) verändert wird.

6. Überwachungsverfahren nach einem der Ansprüche 1 bis 5, **dadurch gekennzeichnet, dass** die Bilder (Bᵢ) des Endes (4) der Schweißelektrode (2) während des Polaritätswechsels eines AC-Schweißprozesses aufgenommen werden.

7. Überwachungsverfahren nach einem der Ansprüche 1 bis 6, **dadurch gekennzeichnet, dass** die Bilder (Bᵢ) des Endes (4) der Schweißelektrode (2) während Prozessphasen des Schweißprozesses mit niedrigerem Schweißstrom (I) aufgenommen werden.

8. Überwachungsverfahren nach einem der Ansprüche 1 bis 7, **dadurch gekennzeichnet, dass** Überwachungsverfahren nach einem der Ansprüche 1 bis 7, **dadurch gekennzeichnet, dass** die vordefinierte Form (Fᵥ) und allenfalls die vordefinierte Position (Pᵥ) des Endes (4) der Schweißelektrode (2) durch Aufnahme von Bildern des Endes (4) einer neuen Schweißelektrode (2) vor der Durchführung des Schweißprozesses festgelegt und gespeichert wird.

9. Überwachungsverfahren nach einem der Ansprüche 1 bis 8, **dadurch gekennzeichnet, dass** die zumindest eine Kamera (3) vor der Aufnahme der Bilder (Bᵢ) der Schweißelektrode (2) kalibriert wird.

10. Vorrichtung (10) zur Überwachung einer nichtabschmelzenden Schweißelektrode (2), insbesondere Wolframelektrode, einer automatisierten Lichtbogenschweißvorrichtung (1), insbesondere WIG-Schweißvorrichtung, mit zumindest einer Kamera (3) zur Aufnahme von Bildern (Bᵢ) der Schweißelektrode (2) und einer Bildverarbeitungseinrichtung (11) zur Verarbeitung der Bilder (Bᵢ) und zum Erhalt eines Rückschlusses daraus auf den Zustand der Schweißelektrode (2), wobei die zumindest eine Kamera (3) zur Aufnahme der Bilder (Bᵢ) der Schweißelektrode (2) während eines mit der Lichtbogenschweißvorrichtung (1) durchgeführten Schweißprozesses ausgebildet ist, die Bildverarbeitungseinrichtung (11) zur Nachbearbeitung der Bilder (Bᵢ) und Extraktion des Lichtbogens (L) des Schweißprozesses und zur Ermittlung der Form (F_{d}) des Endes (4) der Schweißelektrode (2) aus den nachbearbeiteten Bildern (Bᵢ') und zum Vergleich mit einer vordefinierten Form (Fᵥ) des Endes (4) der Schweißelektrode (2) ausgebildet ist, **dadurch gekennzeichnet, dass** die Bildverarbeitungseinrichtung (11) zum Ausschneiden und bzw. oder Gewichten von Teilbereichen aus zumindest zwei mit unterschiedlicher Belichtungszeit aufgenommenen Bildern und zum Zusammenfassen der Teilbereiche zu einem zusammengesetzten Bild ausgebildet ist, und die Bildverarbeitungseinrichtung (11) mit einer Signalvorrichtung (12) verbunden ist, welche zur Ausgabe eines Signals (S) bei Abweichung (ΔF) der ermittelten Form (F_{d}) des Endes (4) der Schweißelektrode (2) von der vordefinierten Form (Fᵥ) des Endes (4) der Schweißelektrode (2) ausgebildet ist.

11. Überwachungsvorrichtung (10) nach Anspruch 10, **dadurch gekennzeichnet, dass** die Bildverarbeitungseinrichtung (11) zur Ermittlung der Position (P_{d}) des Endes (4) der Schweißelektrode (2) aus den nachbearbeiteten Bildern (Bᵢ') und zum Vergleich mit einer vordefinierten Position (Pᵥ) des Endes (4) der Schweißelektrode (2) ausgebildet ist, und die Bildverarbeitungseinrichtung (11) mit einer Signalvorrichtung (12) verbunden ist, welche zur Ausgabe eines Signals (S') bei Abweichung (ΔF) der ermittelten Position (P_{d}) des Endes (4) der Schweißelektrode (2) von der vordefinierten Position (Pᵥ) des Endes (4) der Schweißelektrode (2) ausgebildet ist.

12. Überwachungsvorrichtung (10) nach Anspruch 10 oder 11, **dadurch gekennzeichnet, dass** die Signalvorrichtung (12) durch eine Warnsignalvorrichtung (13), insbesondere einen Lautsprecher (14) zur Ausgabe eines akustischen Warnsignals als Signal (S, S') oder durch eine Anzeige (15) zur Ausgabe eines optischen Warnsignals als Signal (S, S') und bzw. oder durch eine mit der automatisierten Lichtbogenschweißvorrichtung (1) verbundene Steuervorrichtung (16) zur Ausgabe eines Steuersignals als Signal (S, S') gebildet ist.

13. Überwachungsvorrichtung (10) nach einem der Ansprüche 10 bis 12, **dadurch gekennzeichnet, dass** eine Kalibrationseinrichtung (17) zur Kalibration der zumindest einen Kamera (3) vor der Aufnahme der Bilder (Bᵢ) der Schweißelektrode (2) vorgesehen ist.

14. Überwachungsvorrichtung (10) nach einem der Ansprüche 10 bis 13, **dadurch gekennzeichnet, dass** zumindest eine Lichtquelle (6) vorgesehen ist.

## Claims

1. Method for monitoring a non-melting welding electrode (2), in particular a tungsten electrode, of an automated arc welding apparatus (1), in particular a TIG welding apparatus, wherein with the aid of at least one camera (3), images (Bᵢ) of the welding electrode (2) are captured and the images (Bᵢ) are processed and the state of the welding electrode (2) is concluded therefrom, and the images (Bᵢ) of the welding electrode (2) are captured during a welding process carried out with the arc welding apparatus (1), the images (Bᵢ) are reprocessed and the arc (L) of the welding process is extracted, and the shape (F_{d}) of the end (4) of the welding electrode (2) is determined from the reprocessed images (Bᵢ') and compared with a predefined shape (Fᵥ) of the end (4) of the welding electrode (2), **characterised in that** the images (Bᵢ) are reprocessed by capturing at least two images with different exposure times, cutting out and/or weighting partial areas from the at least two images with different exposure times, and combining them to form a composite image and, in the event of a deviation (ΔF) of the determined shape (F_{d}) of the end (4) of the welding electrode (2) from the predefined shape (Fᵥ) of the end (4) of the welding electrode (2), a signal is output.

2. The monitoring method according to claim 1, **characterised in that** the position of the end (4) of the welding electrode (2) is determined from the reprocessed images (Bᵢ') and compared with a predefined position (Pᵥ) of the end (4) of the welding electrode (2), and a signal is output in case of deviation (ΔP) of the determined position (P_{d}) of the end (4) of the welding electrode (2) from the predefined position (Pᵥ) of the end (4) of the welding electrode (2).

3. The monitoring method according to claim 1 or 2, **characterised in that** the shape (F) of the end (4) of the welding electrode (2) is determined by the angle (α_{E}) of a tip of the welding electrode (2) and/or the length (l_{E}) of the welding electrode (2) projecting from the end of a gas nozzle (5) and/or the diameter (D_{E}) of a cylindrical part of the welding electrode (2) .

4. The monitoring method according to any one of claims 1 to 3, **characterised in that** a warning signal, in particular an acoustic or optical warning signal, a control signal for the automated arc welding apparatus (1) and/or a switch-off signal for the automated arc welding apparatus (1) is output as the signal (S, S').

5. The monitoring method according to any one of claims 1 to 4, **characterised in that** it is provided that the signal (S, S') is changed as a function of the deviation (ΔF) of the determined shape (F_{d}) of the end (4) of the welding electrode (2) from the predefined shape (Fᵥ) of the end (4) of the welding electrode (2) and/or as a function of the deviation (ΔP) of the determined position (P_{d}) of the end (4) of the welding electrode (2) from the predefined position (Pᵥ) of the end (4) of the welding electrode (2).

6. The monitoring process according to any one of claims 1 to 5, **characterised in that** the images (Bᵢ) of the end (4) of the welding electrode (2) are captured during the polarity change of an AC welding process.

7. The monitoring method according to any one of claims 1 to 6, **characterised in that** the images (Bᵢ) of the end (4) of the welding electrode (2) are captured during process phases of the welding process with lower welding current (I).

8. The monitoring method according to any one of claims 1 to 7, **characterised in that** the predefined shape (Fᵥ) and, if necessary, the predefined position (Pᵥ) of the end (4) of the welding electrode (2) are determined and stored by capturing images of the end (4) of a new welding electrode (2) before the welding process is carried out.

9. The monitoring method according to any one of claims 1 to 8, **characterized in that** the at least one camera (3) is calibrated before capturing the images (Bᵢ) of the welding electrode (2).

10. Apparatus (10) for monitoring a non-melting welding electrode (2), in particular a tungsten electrode, of an automated arc welding apparatus (1), in particular a TIG welding device, having at least one camera (3) for capturing images (Bᵢ) of the welding electrode (2) and an image processing device (11) for processing the images (Bᵢ) and for obtaining a conclusion therefrom as to the state of the welding electrode (2), wherein the at least one camera (3) is configured for capturing the images (Bᵢ) of the welding electrode (2) during a welding process carried out with the arc welding apparatus (1), the image processing device (11) being configured for reprocessing the images (Bᵢ) and extracting the arc (L) of the welding process and for determining the shape (F_{d}) of the end (4) of the welding electrode (2) from the reprocessed images (Bᵢ') and for comparison with a predefined shape (Fᵥ) of the end (4) of the welding electrode (2), **characterised in that** the image processing device (11) is configured for cutting and/or weighting sub-areas from at least two images captured with different exposure time and for combining the sub-areas to form a composite image, and the image processing device (11) is connected to a signal device (12) configured for outputting a signal (S) in the event of deviation (ΔF) of the determined shape (F_{d}) of the end (4) of the welding electrode (2) from the end (4) of the welding electrode (2) formed by the predefined shape (Fv) of the end (4) of the welding electrode (2).

11. The monitoring apparatus (10) according to claim 10 **characterised in that** the image processing device (11) is designed for determining the position (P_{d}) of the end (4) of the welding electrode (2) from the reprocessed images (Bᵢ') and for comparison with a predefined position (Pᵥ) of the end (4) of the welding electrode (2), and the image processing device (11) is connected to a signal device (12) which is designed for outputting a signal (S') in case of deviation (ΔF) of the determined position (P_{d}) of the end (4) of the welding electrode (2) from the predefined position (Pᵥ) of the end (4) of the welding electrode (2).

12. The monitoring apparatus (10) according to claim 10 or 11, **characterised in that** the signal device (12) is formed by a warning signal device (13), in particular a loudspeaker (14) for outputting an acoustic warning signal as a signal (S, S') or by a display (15) for outputting an optical warning signal as a signal (S, S') and/or by a control device (16) connected to the automated arc welding apparatus (1) for outputting a control signal as a signal (S, S').

13. The monitoring apparatus (10) according to any one of claims 10 to 12, **characterised in that** a calibration device (17) is provided for calibrating the at least one camera (3) before capturing the images (Bᵢ) of the welding electrode (2).

14. The monitoring apparatus (10) according to any one of claims 10 to 13, **characterised in that** at least one light source (6) is provided.

## Revendications

1. Procédé de surveillance d'une électrode de soudage (2) non fusible, en particulier une électrode en tungstène, d'un dispositif automatisé de soudage à l'arc (1), en particulier un dispositif de soudage TIG, dans lequel des images (Bᵢ) de l'électrode de soudage (2) sont capturées à l'aide d'au moins une caméra (3) et les images (Bᵢ) sont traitées et une conclusion en est tirée quant à l'état de l'électrode de soudage (2), et les images (Bᵢ) de l'électrode de soudage (2) sont capturées pendant un processus de soudage exécuté avec le dispositif automatisé de soudage à l'arc (1), les images (Bᵢ) sont traitées ultérieurement et l'arc électrique (L) du processus de soudage est extrait et la forme (F_{d}) de l'extrémité (4) de l'électrode de soudage (2) est établie à partir des images (Bᵢ') traitées ultérieurement et comparée à une forme (Fᵥ) prédéfinie de l'extrémité (4) de l'électrode de soudage (2), **caractérisé en ce que** les images (Bᵢ) sont traitées ultérieurement **en ce que** sont capturées au moins deux images avec un temps d'exposition différent, à partir des au moins deux images avec un temps d'exposition différent des zones partielles sont découpées et/ou pondérées, et rassemblées en une image composée, et un signal (S) est émis dans le cas d'un écart (ΔF) de la forme (F_{d}) établie de l'extrémité (4) de l'électrode de soudage (2) par rapport à la forme (Fᵥ) prédéfinie de l'extrémité (4) de l'électrode de soudage (2).

2. Procédé de surveillance selon la revendication 1, **caractérisé en ce que** la position (P_{d}) de l'extrémité (4) de l'électrode de soudage (2) est établie à partir des images (Bᵢ') traitées ultérieurement et comparée à une position (Pᵥ) prédéfinie de l'extrémité (4) de l'électrode de soudage (2) et un signal (S') est émis dans le cas d'un écart (ΔP) de la position (P_{d}) établie de l'extrémité (4) de l'électrode de soudage (2) par rapport à la position (Pᵥ) prédéfinie de l'extrémité (4) de l'électrode de soudage (2).

3. Procédé de surveillance selon la revendication 1 ou 2, **caractérisé en ce que** la forme (F) de l'extrémité (4) de l'électrode de soudage (2) est établie par l'angle (α_{E}) d'une pointe de l'électrode de soudage (2) et/ou la longueur (l_{E}) de l'électrode de soudage (2) dépassant depuis une extrémité d'une buse de gaz (5), et/ou le diamètre (D_{E}) d'une partie cylindrique de l'électrode de soudage (2).

4. Procédé de surveillance selon l'une des revendications 1 à 3, **caractérisé en ce qu'**en tant que signal (S, S') est émis un signal d'avertissement, en particulier un signal d'avertissement acoustique ou optique, un signal de commande pour le dispositif automatisé de soudage à l'arc (1), et/ou un signal d'arrêt pour le dispositif automatisé de soudage à l'arc (1).

5. Procédé de surveillance selon l'une des revendications 1 à 4, **caractérisé en ce que** le signal (S, S') est modifié en fonction de l'écart (ΔF) de la forme (F_{d}) établie de l'extrémité (4) de l'électrode de soudage (2) par rapport à la forme (Fᵥ) prédéfinie de l'extrémité (4) de l'électrode de soudage (2) et/ou de l'écart (ΔP) de la position (P_{d}) établie de l'extrémité (4) de l'électrode de soudage (2) par rapport à la position (Pᵥ) prédéfinie de l'extrémité (4) de l'électrode de soudage (2).

6. Procédé de surveillance selon l'une des revendications 1 à 5, **caractérisé en ce que** les images (Bᵢ) de l'extrémité (4) de l'électrode de soudage (2) sont capturées pendant le changement de polarité d'un processus de soudage CA.

7. Procédé de surveillance selon l'une des revendications 1 à 6, **caractérisé en ce que** les images (Bᵢ) de l'extrémité (4) de l'électrode de soudage (2) sont capturées pendant des phases de processus du processus de soudage avec un courant de soudage (I) inférieur.

8. Procédé de surveillance selon l'une des revendications 1 à 7, **caractérisé en ce que** la forme (Fᵥ) prédéfinie et éventuellement la position (Pᵥ) prédéfinie de l'extrémité (4) de l'électrode de soudage (2) est fixée et mémorisée avant l'exécution du processus de soudage par une capture d'images de l'extrémité (4) d'une nouvelle électrode de soudage (2).

9. Procédé de surveillance selon l'une des revendications 1 à 8, **caractérisé en ce que** la au moins une caméra (3) est étalonnée avant la capture des images de l'électrode de soudage (2).

10. Dispositif (10) de surveillance d'une électrode de soudage (2) non fusible, en particulier une électrode en tungstène, d'un dispositif automatisé de soudage à l'arc (1), en particulier un dispositif de soudage TIG, avec au moins une caméra (3) pour la capture d'images (Bᵢ) de l'électrode de soudage (2) et un équipement de traitement d'image (11) pour le traitement des images (Bᵢ) et pour l'obtention d'une conclusion qui en est tirée quant à l'état de l'électrode de soudage (2), dans lequel la au moins une caméra (3) est conçue pour la capture des images (Bᵢ) de l'électrode de soudage (2) pendant un processus de soudage exécuté avec le dispositif automatisé de soudage à l'arc (1), l'équipement de traitement d'image (11) est conçu pour le traitement ultérieur des images (Bᵢ) et l'extraction de l'arc électrique (L) du processus de soudage et pour l'établissement de la forme (F_{d}) de l'extrémité (4) de l'électrode de soudage (2) à partir des images (Bᵢ') traitées ultérieurement et pour la comparaison avec une forme (Fᵥ) prédéfinie de l'extrémité (4) de l'électrode de soudage (2), **caractérisé en ce que** l'équipement de traitement d'image (11) est conçu pour la découpe et/ou la pondération de zones partielles à partir d'au moins deux images capturées avec un temps d'exposition différent et pour rassembler les zones partielles en une image composée, et l'équipement de traitement d'image (11) est relié à un dispositif de signal (12), lequel est conçu pour l'émission d'un signal (S) dans le cas d'un écart (ΔF) de la forme (F_{d}) établie de l'extrémité (4) de l'électrode de soudage (2) par rapport à la forme (Fᵥ) prédéfinie de l'extrémité (4) de l'électrode de soudage (2).

11. Dispositif de surveillance (10) selon la revendication 10, **caractérisé en ce que** l'équipement de traitement d'image (11) est conçu pour l'établissement de la position (P_{d}) de l'extrémité (4) de l'électrode de soudage (2) à partir des images (Bᵢ') traitées ultérieurement et pour la comparaison avec une position (Pᵥ) prédéfinie de l'extrémité (4) de l'électrode de soudage (2), et l'équipement de traitement d'image (11) est relié à un dispositif de signal (12), lequel est conçu pour l'émission d'un signal (S') dans le cas d'un écart (ΔF) de la position (P_{d}) établie de l'extrémité (4) de l'électrode de soudage (2) par rapport à la position (Pᵥ) prédéfinie de l'extrémité (4) de l'électrode de soudage (2).

12. Dispositif de surveillance (10) selon la revendication 10 ou 11, **caractérisé en ce que** le dispositif de signal (12) est constitué par un dispositif de signal d'avertissement (13), en particulier un haut-parleur (14), pour l'émission d'un signal d'avertissement acoustique en tant que signal (S, S') ou par un voyant (15) pour l'émission d'un signal d'avertissement optique en tant que signal (S, S') et/ou par un dispositif de commande (16) relié au dispositif automatisé de soudage à l'arc (1) pour l'émission d'un signal de commande en tant que signal (S, S').

13. Dispositif de surveillance (10) selon la revendication 10 à 12, **caractérisé en ce qu'**un équipement d'étalonnage (17) est prévu pour l'étalonnage de la au moins une caméra (3) avant la capture des images de l'électrode de soudage (2).

14. Dispositif de surveillance (10) selon la revendication 10 à 13, **caractérisé en ce qu'**est prévue au moins une source lumineuse (6).
